# EUROPEAN PATENT APPLICATION

(11) **EP 1 167 186 A1**
(43) Date of publication of application: **02.01.2002**
(21) Application number: 01305655.1
(22) Date of filing: 29.06.2001
(51) Int. Cl.: B64D 29/04, B64C 1/14

(54) **Safety enhancement method and safety latch**

(30) Priority: 30.06.2000 GB 0016135
(71) Applicant: Aerospace Design Facilities Limited, Slough, Buckinghamshire SL2 3RN (GB)
(72) Inventor: Oaten, Adrian David, Slough, Buckinghamshire SL2 3RN (GB)
(74) Representative: Newstead, Michael John

(57) **Abstract**

The present invention provides a safety latching mechanism (5) for operating, in conjunction but independently of a primary latching mechanism, to maintain a moveable panel or cowling (6) of an aircraft in a closed or semi-closed configuration. The main operating part of the latching mechanism is attached to the cowling whilst a striker plate (7) is mounted, on the airframe or an adjacent panel (8), to receive the latching mechanism. A pushbutton release, operable independently of the primary latch, and preferably from a position on the external surface of the aircraft, is provided to release the secondary latching action.

## Description

### Field of the Invention

This invention relates to a safety enhancement method and apparatus and, more particularly, to a method and apparatus for enhancing the safety of aircraft.

### Background

Aircraft, both fixed wing and helicopters include moveable panels or cowlings which can be opened for access to the space beneath; and latches are provided on the panels or cowling to hold the same in the closed position during flight. From time to time the latches are not secured properly with the consequence that the panel or cowling becomes detached during flight. At best this leads to damage to, or loss of, the panel; at worst the aircraft is caused to crash.

It is an object of this invention to provide a method of, and/or apparatus for, addressing the above problem; or which will at least provide a useful choice.

### Summary of the Invention

Accordingly, in one aspect, the invention provides a method of enhancing aircraft safety, said method including providing a secondary latching mechanism between an openable panel or cowling, and an airframe or adjacent panel with which said panel or cowling is associated, said secondary latching mechanism, in use, operating in conjunction with a primary latching mechanism also acting between said openable panel or cowling and said airframe or adjacent panel, said method being such that primary and secondary latching is achieved, as said panel or cowling is moved to a closed position, but said primary and secondary latching mechanisms are released independently of one another.

Preferably said method includes providing a secondary latching mechanism which effects latching automatically upon said panel or cowling being moved to said closed position.

Preferably the release action for said secondary latching mechanism is of a different action to that required to release said primary latching.

In a second aspect the invention provides a secondary latching mechanism for enhancing aircraft safety, said secondary latching mechanism being constructed and arranged to operate, in conjunction with, but independently of, a primary latching mechanism between an openable panel, cowling or equipment, and an airframe or adjacent panel with which said panel, cowling or equipment is associated; said secondary latching mechanism being further constructed and arranged to impart a latching action as said panel, cowling or equipment is moved to a closed position against or adjacent to said airframe or adjacent panel, the latching action of said secondary latching mechanism being releasable independently of the latching action of said primary latching mechanism.

Preferably said secondary latching mechanism includes a first part arranged for mounting on said panel, cowling or equipment, said first part being constructed and arranged to operate in conjunction with a second part mounted on said airframe or adjacent panel..

Preferably said first part includes a push button accessible from a position external to said aircraft when said panel, cowling or equipment is said closed position, said push button being operable to release said secondary latching action.

Preferably said first part includes at least two fingers displaceable between retracted positions, in which said latch can engage with said second part; and extended positions in which said fingers can retain said first part within said second part. Said fingers may be moved into the retracted positions,
together, by operation of said push button. Each said finger may also be moved into its retracted position, independently of the other, by application of an external force applied directly thereto. Biasing means are provided to bias said fingers into the extended positions.

Many variations in the way the present invention can be performed will present themselves to those skilled in the art. The description which follows is intended as an illustration only of one means of performing the invention and the lack of description of variants should not be regarded as limiting. Wherever possible, a description of a specific element should be deemed to include equivalents thereof whether in existence now or in the future. The scope of the invention should be limited by the appended claims alone.

### Brief Description of the Drawings

One form of the invention will now be described with reference to the accompanying drawings in which:
- Figures 1A & 1B: show isometric views of safety enhancement apparatus according to the invention in a latched and an unlatched configuration respectively;
- Figure 2:: shows an exploded view of the apparatus shown in Figures 1A & 1B;
- Figures 3A & 3B: show part sectional plan views of the apparatus shown in the previous Figures with the latching fingers in extended and retracted positions respectively;
- Figure 4:: shows, in an enlarged scale, a view along the line A-A in Figure 3A;
- Figure 5:: shows an exploded view of a push button assembly incorporated in the apparatus shown in the previous Figures; and
- Figure 6:: shows a schematic sectional view of the components of Figure 5, assembled together.

### Detailed Description of Working Embodiment

This invention provides a method of, and/or apparatus for enhancing aircraft safety by providing secondary latching on moveable panels such as cowlings and hatches. The secondary latching operates in conjunction with, but nevertheless independently of, a primary latching mechanism, the latter being the primary means of holding the cowling, hatch or panel in a closed position. Both primary and secondary latching mechanisms are preferably provided in a form which ensures primary and secondary latching is effected, at least in part, as the moveable panel is moved to a "closed" position. However, the configuration is such that release of the two latching actions requires individual manipulation of the two latching mechanisms in order that the panel may be moved to an open position.

It thus follows that the secondary latching is of a different form, and releasable by a different action, than the primary latching applying between the panel and the airframe. In this way, the panel is still retained closed, or near to closed, if the primary latch is, inadvertently, not fully secured.

Referring now to the drawings, one form of safety enhancing apparatus according to the invention, in the form of latch 5, is depicted. This particular form of latch has been designed, in particular, to provide secondary latching for the engine cowling panels of an AS 350/AS 355 model Squirrel helicopter manufactured by Eurocopter. In the past, instances have occurred when the primary latches on these engine cowling panels (which are of the draw latch variety) have not been properly secured, leading to the cowling opening during flight, with catastrophic consequences. It will be appreciated, however, that the same latch 5, or one substantially the same, could be applied to other panels or equipment of the same aircraft, or different aircraft including fixed wing aircraft, for the same purpose of providing a secondary latching mechanism.

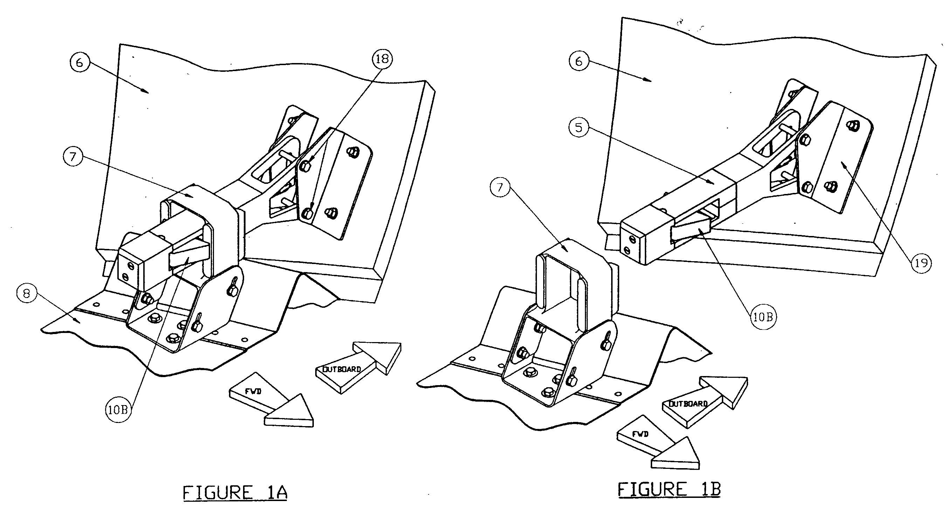

In the form shown a first part, consisting of the main operating elements of the latch 5, is mounted on cowling 6 of the aircraft, the first part being configured and mounted to engage a second part or striker mechanism 7 mounted on the airframe 8 or on a panel part adjacent to the aperture to be closed by the cowling 8. As can be seen the first latch part 5 includes a pair of fingers 10a, 10b which extend outwardly from the side surfaces 9 of the latch. These fingers can be displaced, against a spring bias, into retracted positions in the planes of the surfaces 9 so as to allow the latch to pass through and be engaged with the striker mechanism 7. Once fully engaged in the striker mechanism, as shown in Figure 1A, the spring bias, which will be described in greater detail below, operates to extend the fingers again so as to maintain the latch locked in the striker mechanism.

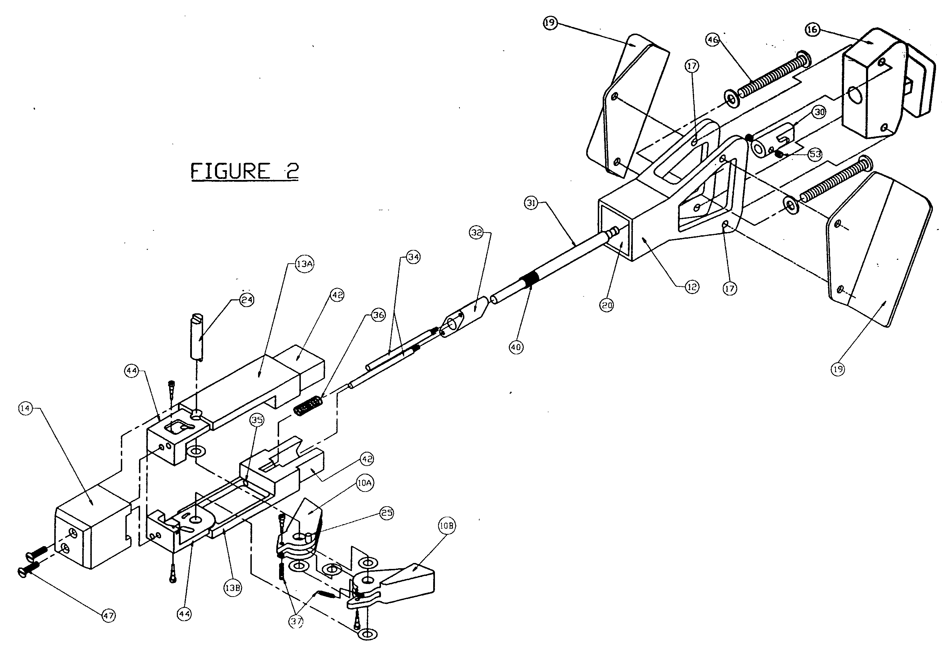

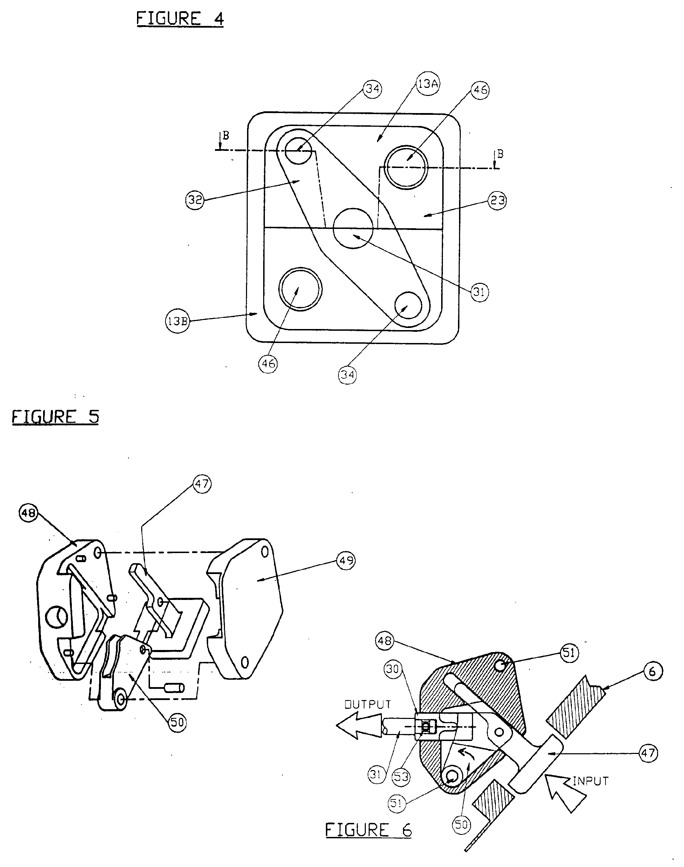

Referring now to Figure 2, the latch body is defined by a mount section 12, two main body halves 13a and 13b, and an end cap 14. As can be seen, the rear of the mount section 12 is formed with a void 15 to receive an operating push-button assembly 16, which is depicted in greater detail in Figures 5 and 6, and which will be described in greater detail below. The mount section further includes through bores 17, through which bolts 18 locate and attach the button assembly 16 (through holes 51) in the void 15, and attachment brackets 19. Attachment brackets 19 then attach to the cowling 6. The mount further includes a forward facing aperture 20 into which the main body halves 13a, 13b are received.

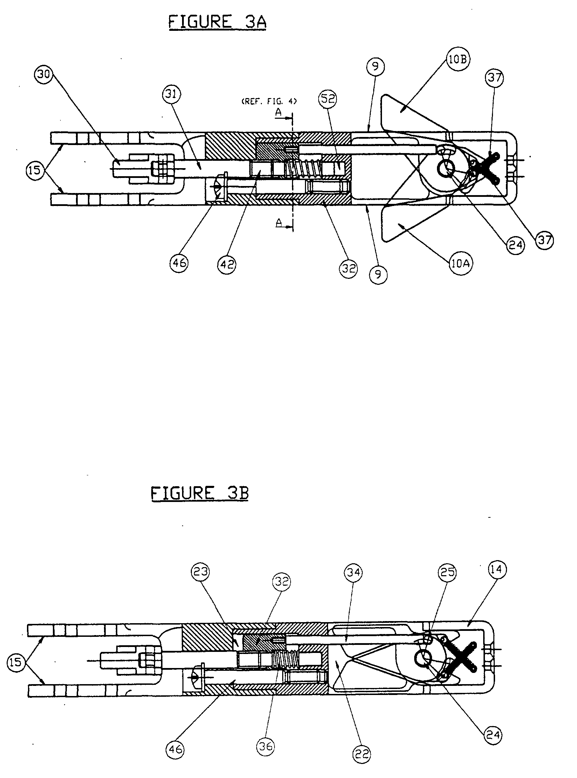

The body halves 13a and 13b are preferably identical members which combine in mirror fashion to define two internal cavities, rectangular forward internal cavity 22 (Figure 3B) as well as a rear internal cavity 23, the latter being shown more clearly in Figure 4. The cavity 22 receives the latching fingers 10a, 10b while the cavity 23 receives part of the retraction mechanism for the fingers as will be described in greater detail below.

The fingers 10a, 10b are also preferably identical but, again, reversed with respect to one another. The fingers 10a, 10b are mounted on a common pivot shaft 24 extending vertically through the cavity 22. The fingers both include an operating lug 25 although only the upwardly aligned lug can be seen on finger 10a in Figure 2, the lug on the other finger 10b projecting downwards and thus being out of sight in this drawing. The fingers 10a and 10b are continuously biased to the extended positions by springs 37.

Push button assembly 16 locates with a follower 30 on the forward end thereof, the follower 30 receiving and clamping a button pin 31. The opposite end of the button pin is fixed to a plunger 32 which, as can be seen more clearly from Figure 4, is sized and positioned to extend obliquely across rear cavity 23. The outer extremities of the plunger engage finger operating pins 34 which are mounted in guide bores 35 formed through the body halves 13a, 13b so that the operating pins 34 are presented to the plunger 32 in opposite corners of the cavity 23. The remote ends of the pins are aligned to engage the lugs 25 projecting from the fingers 10a, 10b. Thus the pin 34 positioned in the upper left hand corner of cavity 23, as shown in Figure 4, operates finger 10a while the pin 34 positioned in the bottom right hand corner of cavity 23 operates finger 10b. As the button 47 is depressed in assembly 16, the button pin 31 is displaced to the left as shown in Figure 2. This, in turn, displaces plunger 32 and thus finger operating pins 34 to the left so causing finger 10b to be pivoted in a clockwise direction about shaft 24, and the finger 10a in an anti-clockwise direction about shaft 24.

Coil spring 36 is provided to bias the push button to the extended position i.e. to provide a bias against which the button is depressed. Coil spring 36 also ensures free movement of fingers 10a and 10b by biasing plunger 32 and pins 34 away from lugs 25. Further coil springs 37 are mounted in crossover fashion in the forward ends of body halves 13a, 13b to continuously bias the fingers 10a, 10b to the extended positions shown in Figure 3A. Displacement of the fingers into their retracted positions, achieved through operation of the push button assembly 16, is against the bias of the springs 36 and 37.

It should be appreciated that the fingers 10a, and 10b, although mounted on a common pivot shaft 24, can be displaced independently of one another. Thus, should one of the springs 37 fail, the other finger can still be fully effective. Likewise if that part of the striker mechanism 7 against which one finger bears, should fail, the latching action can still be effected by the remaining finger.

It will be noted that the button pin 31 has a thread which screws into plunger 32. This allows the adjustment of the maximum travel on the plunger 32 as the button pin comes to a stop at the end of cavity 52 as shown in Figure 3B. This, in turn, ensures that an over-stress condition does not occur at the lugs 25 on fingers 10a and 10b. Once this adjustment is set between plunger 32 and the button pin 31, the follower 30 is clamped on to button pin 31 using grub screws 53 in the orientation shown in Figures 3A and 3B. When the button assembly 16 is installed, swing plate 50 locates over follower 30, which stops any rotational movement of button pin 31, thus maintaining the maximum travel setting of the plunger 32 and, therefore, pins 34.

The body halves 13a, 13b have spigots 42 and 44 formed at opposite ends thereof. When the body halves 13a, 13b are combined together, the spigots 42 combine to engage in aperture 20 provided in the mount section 12 whilst the spigots 44 combine to serve as a mount for end cap 14 which is fixed in position by screws 47. Assembly screws 46 are passed through an internal wall within the mount section 12 and engage in threaded fixing bores provided in those corners of the main body halves 13a, 13b not occupied by the through bores 35 which receive the finger operating pins 34. This is clearly illustrated in Figure 4.

In use the latch as above described in mounted on the inner surface of a cowling or other moveable panel, as described, and so as to co-operate with striker mechanism 7 mounted on the airframe. The push button projects through an aperture formed in the cowling so as to be accessible from outside the aircraft. As the cowling is moved into the closed position, the fingers 10a, 10b are displaced, against the bias of springs 37, so as to allow the latch to pass through the striker. When the latch is fully engaged in the striker mechanism, the fingers are again extended, and maintained in the extended position, by springs 37. The cowling cannot thereafter be lifted unless and until the push button 16 is manually operated from outside the aircraft.

Whilst the description provided herein refers to the secondary latch being releasable by means of a push button, it will be appreciated that specific applications may require other forms of release including cable, electric, or hydraulic/pneumatic.

It will thus be appreciated that the present invention provides a relatively yet effective form of safety enhancement for aircraft which, at least in the case of the embodiment described, provides automatic back-up in the event a primary latching mechanism is not operated correctly or fails when in use.

## Claims

1. A method of enhancing aircraft safety, said method including providing a secondary latching mechanism between an openable panel or cowling, and an airframe or adjacent panel with which said panel or cowling is associated, said secondary latching mechanism, in use, operating in conjunction with a primary latching mechanism also acting between said openable panel or cowling and said airframe or adjacent panel, said method being such that primary and secondary latching is achieved, as said panel or cowling is moved to a closed position, but said primary and secondary latching mechanisms are released independently of one another.

2. A method as claimed in claim 1 including providing secondary latching means which effects a latching action automatically upon said panel or cowling being moved to said closed position.

3. A method as claimed in claim 1 or claim 2 wherein the release action for said secondary latching mechanism is of a different action to that required to release said primary latching mechanism.

4. A secondary latching mechanism for enhancing aircraft safety, said secondary latching mechanism being constructed and arranged to operate, in conjunction with, but independently of, a primary latching mechanism between an openable panel, cowling or equipment, and an airframe or adjacent panel with which said panel, cowling or equipment is associated; said secondary latching mechanism being further constructed and arranged to impart a latching action as said panel, cowling or equipment is moved to a closed position against or adjacent to said airframe or adjacent panel, the latching action of said secondary latching mechanism being releasable independently of the latching action of said primary latching mechanism.

5. A secondary latch as claimed in claim 4 when arranged for mounting on said panel, cowling or equipment, and to operate in conjunction with a striker mechanism mounted on said airframe.

6. A secondary latch as claimed in claim 4 or claim 5 including a push button accessible from a position external to said aircraft when said panel, cowling or equipment is said closed position, said push button being operable to release said latching action.

7. A secondary latch as claimed in any one of claims 4 to 6 including at least two fingers displaceable between retracted positions, in which said latch can engage with said striker mechanism; and extended positions in which said fingers can retain said secondary latch within said striker mechanism.

8. A secondary latch as claimed in claim 7 wherein said fingers are moveable into the retracted positions, together, by operation of said push button.

9. A secondary latch as claimed in claim 7 or claim 8 wherein each of said fingers is also moveable into its retracted position, independently of the other, by application of an external force applied directly thereto.

10. A secondary latch as claimed in any one of claims 7 to 9 wherein each of said fingers is independently biased into said extended position.
